# EUROPEAN PATENT APPLICATION

(11) **EP 2 105 876 A2**
(43) Date of publication of application: **30.09.2009**
(21) Application number: 09004265.6
(22) Date of filing: 25.03.2009
(51) Int. Cl.: G06Q 30/00

(54) **Photograph printing system**

(30) Priority: 27.03.2008 JP 2008084608
(71) Applicant: NORITSU KOKI CO., LTD., Wakayama-shi, Wakayama-ken 640-8550 (JP)
(72) Inventor: Tsuji, Yuki, Wakayama-shi Wakayama-ken 640-8550 (JP); Matsushita, Masayuki, Wakayama-shi Wakayama-ken 640-8550 (JP); Yukawa, Masaaki, Wakayama-shi Wakayama-ken 640-8550 (JP)
(74) Representative: Müller-Boré & Partner Patentanwälte

(57) **Abstract**

When a newly received printed photograph and an undelivered order exist in relation to an identical user, a delivery device is controlled such that the newly received printed photograph is delivered at the same time as a printed photograph relating to the undelivered order.

## Description

### BACKGROUND OF THE INVENTION AND RELATED ART STATEMENT

### Field of the Invention:

The present invention relates to a photograph printing system in which a reception device, a management server, and a photograph printing device are connected via a predetermined network.

### Description of the Related Art:

Recently, a delivery device for delivering printed photographs ordered from a user is disposed alongside a photograph printing device in a photograph developing store provided in a corner of a large commercial facility such as a supermarket. For example, when the user causes a barcode reader of the delivery device to read a reception voucher issued by the photograph developing store at the time of order placement, the ordered printed photographs are discharged from the delivery device, and thus the printed photographs can be received without the need to communicate with a staff member.

Incidentally, a reception device for receiving an order for photograph printing may be disposed alongside the photograph printing device in the photograph developing store such that the user can also order photograph printing from the reception device.

Moreover, in recent years it has become possible for a user to access an Internet website administered by the photograph developing store from a home personal computer and place an order for photograph printing via the Internet.

Hence, the user can place an additional order using the home personal computer after placing an order using the reception device.

Further, JP2007-249827 discloses a photograph printing system in which delivery information including information relating to delivery of the printed photographs is displayed on a display of the delivery device.

However, in this conventional system, the printed photographs are managed in order units even when ordered by the same user, and therefore, when the user places an order in the manner described above, he/she must perform a separate delivery operation on the delivery device in relation to the printed photographs of each order, which is troublesome for the user.

Further, the user may place a plurality of orders from the home personal computer or the reception device, and in this case also, the user must perform a separate delivery operation on the delivery device in relation to each order, which is troublesome for the user.

Furthermore, the technique described in JP2007-249827 relates to an image displayed on the display of the delivery device, and no mention whatsoever is made in relation to lightening a load placed on the user when a plurality of orders are received from the same user.

### SUMMARY OF THE INVENTION

An object of the present invention is to provide a photograph printing system with which a load placed on a user when printed photographs are delivered can be reduced in a case where a plurality of orders are received from the same user.

A photograph printing system according to one aspect of the present invention is a photograph printing system in which a terminal device for receiving an order for photograph printing, a photograph printing device for outputting a printed photograph in accordance with the order, a delivery device for delivering the printed photograph output by the photograph printing device to a user, and a management server for managing the order are connected via a predetermined network, wherein the terminal device includes an order reception unit that receives the order for photograph printing in accordance with a member code and order information input by a registered user who has completed member registration in advance, and transmits order notification information including the member code and the order information to the management server, the delivery device includes a delivery completion notification unit that transmits a delivery completion notification to the management server when delivery of the printed photograph relating to the order received by the terminal device to the user is completed, and the management server includes : an order management unit that manages the order by creating a customer information database on the basis of the order notification information transmitted from the terminal device and the delivery completion notification transmitted from the delivery device; a determination unit which, upon reception of the order notification information transmitted from the terminal device, determines whether or not an undelivered order, or in other words an undelivered printed photograph, exists in relation to the registered user relating to the member code included in the order notification information on the basis of the customer information database; and a delivery request unit which, when the determination unit determines that an undelivered order exists, generates delivery request information for controlling the delivery device such that the printed photograph relating to the received order notification information is delivered simultaneously with the printed photograph relating to the undelivered order, and transmits the generated delivery request information to the delivery device.

These and other objects, features and advantages of the present invention will become more apparent upon reading the following detailed description along with the accompanying drawings.

### BRIEF DESCRIPTION OF THE DRAWINGS

Fig. 1 is an overall constitutional diagram of a photograph printing system according to an embodiment of the present invention;
Fig. 2 is an external constitutional diagram of a reception device shown in Fig. 1;
Fig. 3 is a block diagram showing the reception device shown in Fig. 2;
Fig. 4 is a block diagram of a photograph printing device shown in Fig. 1;
Fig. 5 is an external constitutional diagram of a delivery device shown in Fig. 1;
Fig. 6 is an external constitutional diagram of the delivery device shown in Fig. 1;
Fig. 7 is a block diagram of the delivery device;
Fig. 8 is a block diagram of a management server shown in Fig. 1;
Fig.9 is a block diagram of a terminal device shown in Fig. 1;
Fig. 10 is a flowchart showing an operation performed by the photograph printing system during order reception;
Fig. 11 is a flowchart showing an operation performed by the photograph printing system during printed photograph delivery;
Fig. 12 is a view showing an example of a data structure of order notification information relating to a registered user;
Fig. 13 is a view showing an example of a data structure of printing output request information;
Fig. 14 is a view showing an example of a data structure of delivery request information;
Fig. 15 is a view showing an example of a data structure of a rack management table;
Fig. 16 is a view showing an example of the data structure of the rack management table;
Fig. 17 is a view showing an example of the data structure of a delivery completion notification;
Fig. 18 is a view showing an example of a data structure of a customer information database;
Fig. 19 is an illustrative view showing the processing of a step S9; and
Fig. 20 is an illustrative view showing the processing of a step S5.

### DETAILED DESCRIPTION OF THE PREFERRED EMBODIMENTS OF THE INVENTION

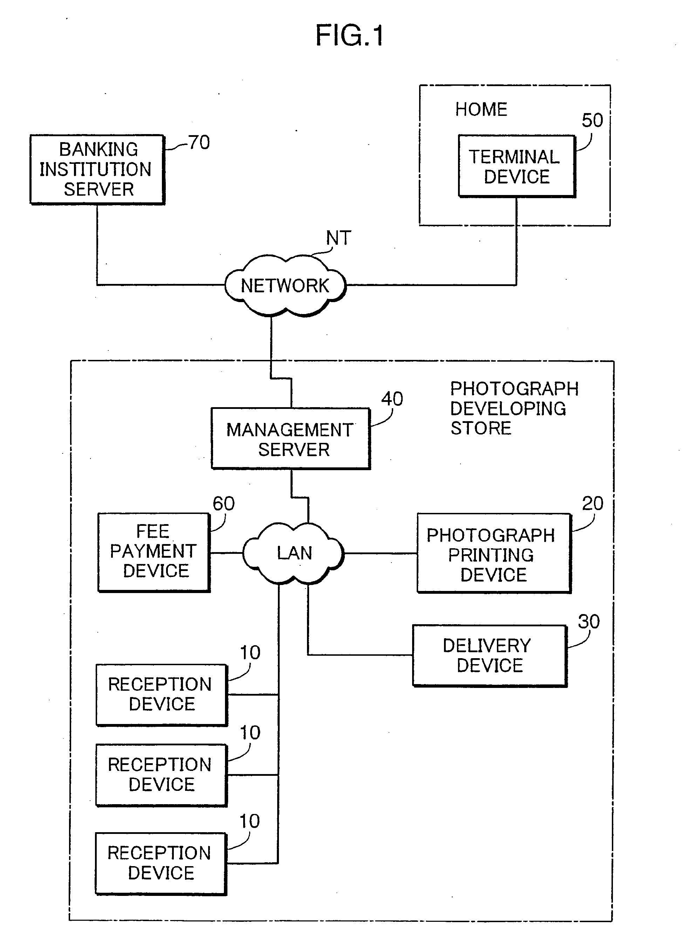

A photograph printing system according to an embodiment of the present invention will be described below with reference to the drawings. Fig. 1 is an overall constitutional diagram of a photograph printing system according to an embodiment of the present invention. The photograph printing system includes a reception device 10 (an example of a second terminal device), a photograph printing device 20, a delivery device 30, a management server 40, a terminal device 50 (an example of a first terminal device), and a fee payment device 60.

The reception device 10, photograph printing device 20, delivery device 30, management server 40, and fee payment device 60 are disposed in a photograph developing store, for example, and connected communicably via a LAN (Local Area Network). The terminal device 50 is connected to the management server 40 and a banking institution server 70 via a network NT. Here, the Internet may be employed as the network NT, for example, such that various data are exchanged in accordance with a TCP/IP (Transmission Control Protocol/Internet Protocol) communication protocol.

The reception device 10 is a dedicated device for receiving a photograph printing order from a user. Note that in Fig. 1, three reception devices 10 are shown, but the present invention is not limited thereto, and one or a plurality of reception devices 10 may be provided.

The photograph printing device 20 is a device for outputting printed photographs in accordance with an order received by the reception device 10 or the terminal device 50. In this embodiment, a device that exposes photographic paper using a laser system or a device that prints an image on paper using an inkjet system, for example, may be employed.

The delivery device 30 is a device for automatically delivering a printed photograph output by the photograph printing device 20 to the user. The management server 40 is constituted by a computer, for example, and manages orders received by the reception device 10 and the terminal device 50.

The terminal device 50 is constituted by a computer owned by the user, and receives an order for photograph printing from the user. The fee payment device 60 is constituted by a fee payment device having a LAN communication function, which collects a printing fee corresponding to an order from the user. The banking institution server 70 is a device managed by a banking institution specified by the user, and is used when the management server 40 performs electronic payment.

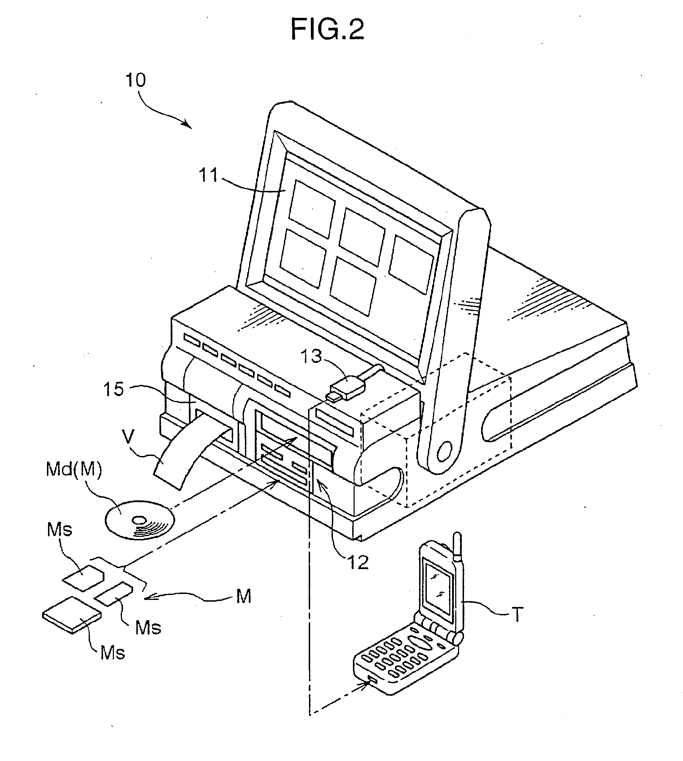

Fig. 2 is an external constitutional diagram of the reception device 10 shown in Fig. 1. As shown in Fig. 2, the reception device 10 includes a display 11, a media drive 12, a connector 13, and a reception voucher printer 15.

The display 11 is constituted by a liquid crystal display device formed with a touch panel on a display surface thereof, for example. The media drive 12 obtains image data from a medium M. In this embodiment, a semiconductor medium Ms such as a compact flash (registered trademark), an SD memory card (registeredtrademark), or a memory stick (registered trademark) or a disc-shaped medium Md such as a compact disc, a CD-R (CD-Recordable), or an MO (Magnet Optical Disc) may be employed as the medium M. Accordingly, the media drive 12 is constituted by a media drive that corresponds to these respective media M.

The connector 13 is used for connecting a camera-equipped portable telephone T, and obtains image data captured by the portable telephone T. The reception voucher printer 15 issues a reception voucher V proving that an order has been received when the order is received from the user.

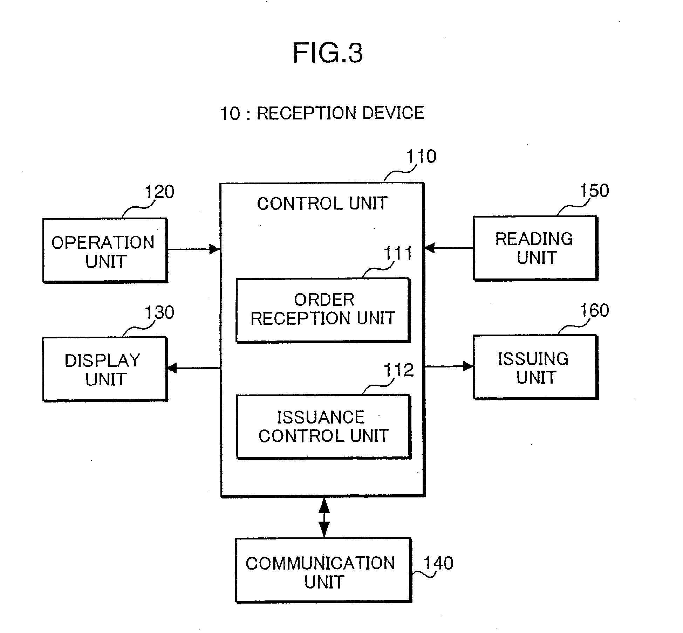

Fig. 3 is a block diagram of the reception device 10 shown in Fig. 2. As shown in Fig. 3, the reception device 10 includes a control unit 110, an operation unit 120, a display unit 130, a communication unit 140, a reading unit 150, and an issuing unit 160.

The control unit 110 is constituted by a CPU, for example, and is responsible for overall control of the reception device 10. In this embodiment in particular, the control unit 110 includes an order reception unit 111, and an issuance control unit 112.

The order reception unit 111 receives a member code from the user for identifying him/herself, and transmits the received member code to the management server 40 via the LAN. Here, a symbol string allocated uniquely to each user, for example, may be employed as the member code. The member code is issued when the user registers as a member of a body organized by the photograph developing store.

Further, after receiving a determination result from the management server 40 indicating that the user who inputted the member code is a registered member, the order reception unit 111 displays a registered user operation image on the display unit 130 and prompts the user to input order information in accordance with the operation image. Thus, the photograph printing order is received.

Here, the order reception unit 111 displays an operation image prompting the user to insert the medium M into the media drive 12, whereby the user is caused to insert the medium M into the media drive 12 such that the image data recorded on the medium M are read by the reading unit 150. The order reception unit 111 then displays an operation image on the display unit 130 prompting the user to specify the image data to be printed, from among the image data read by the reading unit 150, and the number of prints of each set of image data, whereby the order reception unit 111 receives the image data specified by the user and the number of prints of each set of image data as the order information. Note that a section in which personal information such as a name input during member registration, for example, is inputted into the registered user operation image has been omitted.

On the other hand, when the order reception unit 111 receives a determination result from the management server 40 indicating that the user who inputted the order information is an unregistered user who has not completed member registration, the order reception unit 111 displays an unregistered user operation image on the display unit 130 and prompts the user to input the order information in accordance with the operation image. Thus, the photograph printing order is received. Here, similarly to the registered user operation image, the unregistered user operation image includes sections relating to the image data and the number of prints of each set of the image data, as well as sections such as the name and address of the unregistered user.

Further, upon reception of an order, the order reception unit 111 calculates a printing fee for the order.

When an order is received from a registered user, the order reception unit 111 generates registered user order notification information from the order information input by the registered user and the calculated printing fee, and transmits the generated order notification information to the management server 40.

When an order is received from an unregistered user, on the other hand, the order reception unit 111 generates unregistered user order notification information from the order information input by the unregistered user and the calculated printing fee, and transmits the generated order notification information to the management server 40.

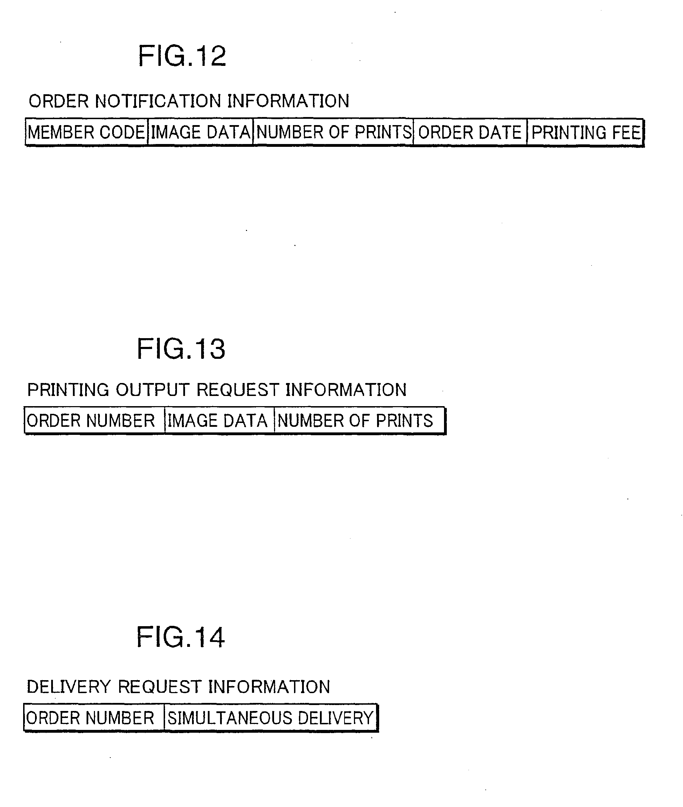

Fig. 12 shows an example of a data structure of the registered user order notification information. As shown in Fig. 12, the order notification information includes columns relating to the member code, image data, number of prints, order date, and printing fee. Note that these columns are examples and may be omitted or supplemented with other columns.

A member code of a registered user is stored in the member code column. Image data read by the reading unit 150 is stored in the image data column. The number of prints of each set of image data stored in the image data column is stored in the print number column. A time, day, month, and year of the order is stored in the order date column. A printing fee for the order is stored in the printing fee column.

Returning to Fig. 3, after transmitting the order notification information to the management server 40, the order reception unit 111 receives order response information corresponding to the order notification information from the management server 40. Here, information such as an order number attached to the order by the management server 40 is included in the order response information.

The issuance control unit 112 generates a barcode indicating the order number included in the order response information transmitted from the management server 40, and controls the issuing unit 160 to print the generated barcode on a sheet of paper, which is issued as the reception voucher V.

The operation unit 120 is constituted by a touch panel or the like formed on the display 11 shown in Fig. 2, and receives operation input from the user. The display unit 130 is constituted by the display 11 shown in Fig. 2, and under the control of the control unit 110, the display unit 130 displays various images for prompting the user to follow an operation procedure while placing an order.

The communication unit 140 is constituted by a communication device that conforms to a LAN communication protocol, and under the control of the control unit 110, the communication unit 140 transmits and receives various data. In this embodiment in particular, the communication unit 140 transmits order information to the management server 40 and receives order response information transmitted by the management server 40.

The reading unit 150 is constituted by the media drive 12 and the connector 13 shown in Fig. 2, and under the control of the control unit 110, the reading unit 150 obtains image data that the user wishes to be subjected to photograph printing. The issuing unit 160 is constituted by the reception voucher printer 15 shown in Fig. 2, and issues the reception voucher V.

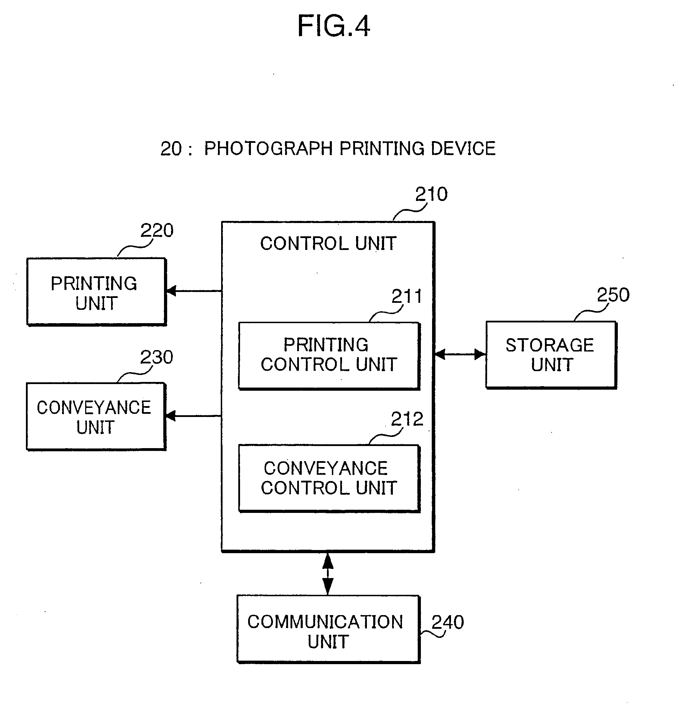

Fig. 4 is a block diagram of the photograph printing device 20 shown in Fig. 1. The photograph printing device 20 includes a control unit 210, a printing unit 220, a conveyance unit 230, a communication unit 240, and a storage unit 250. The control unit 210 is constituted by a CPU (Central Processing Unit), for example, and is responsible for overall control of the photograph printing device 20. The control unit 210 includes a printing control unit 211 (an example of a printing output completion notification unit) and a conveyance control unit 212.

The printing control unit 211 receives printing output request information transmitted from the management server 40 via the communication unit 240, and controls the printing unit 220 in accordance with the received printing output request information such that printed photographs are output by the printing unit 220 in order units.

Fig. 13 is a view showing an example of a data structure of the printing output request information. The printing output request information includes columns relating to order number, image data, and number of prints. The order number of the order to be output is stored in the order number column. The image data included in the order to be output are stored in the image data column. The number of prints of each set of image data is stored in the print number column.

Here, the printing control unit 211 causes the printing unit 220 to output the printed photographs in sequence from the order having the lowest order number.

Further, the printing control unit 211 stores the received printing output request information in the storage unit 250 until the printed photographs relating to the printing output request information have been output.

The conveyance control unit 212 controls the conveyance unit 230 such that a sheet of paper is conveyed to the printing unit 220 when the printing control unit 211 causes the printing unit 220 to perform a printing operation. The printing unit 220 includes an inkjet head, for example, and prints an image on the sheet of paper conveyed by the conveyance unit 230 under the control of the printing control unit 211.

The communication unit 240 is constituted by a communication device conforming to a LAN communication protocol, and serves as a communication interface with the various devices connected to the LAN.

The storage unit 250 is constituted by rewritable non-volatile memory, for example, and stores the printing output request information under the control of the printing control unit 211.

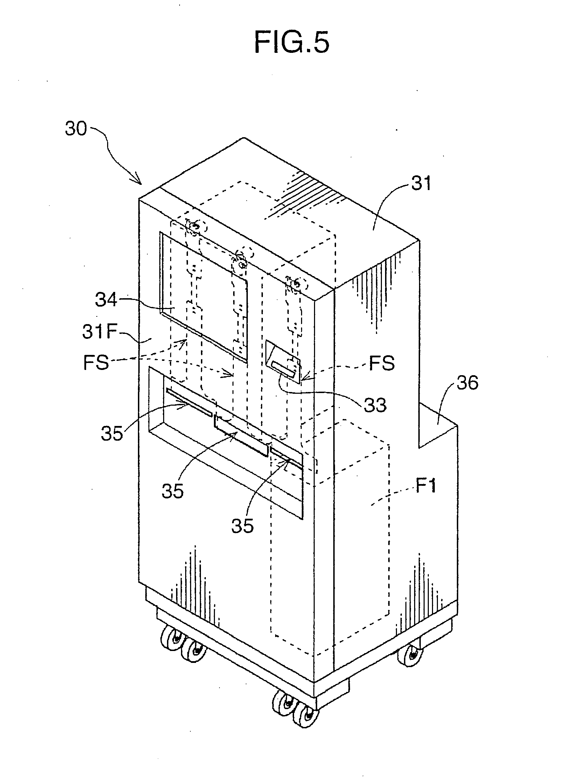

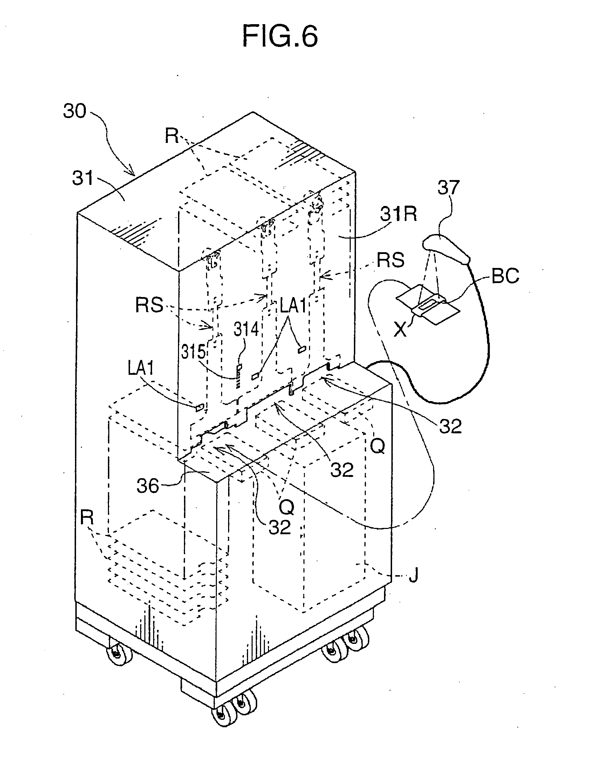

Figs. 5 and 6 are external constitutional diagrams of the delivery device 30 shown in Fig. 1. As shown in Figs. 5 and 6, printed photographs bound by a band X and inserted through an insertion opening 32 formed in a rear surface 31R (rear side) of a housing 31 of the delivery device 30 are carried on one rack R in the interior of the housing 31. When the user holds the reception voucher V against a fixed barcode reader 33 provided on a front surface 31F (front side), the delivery device 30 reads the barcode printed on the reception voucher V to obtain the order number.

The delivery device 30 then specifies, from the obtained order number, the rack R carrying the printed photographs relating to the order number, positions the specified rack R in a discharge opening 35 formed in the front surface 31F of the housing 31, and slides a push-out mechanism Q to the front side such that the printed photographs carried on the rack R are discharged from the discharge opening 35. Thus, the user can receive the ordered printed photographs.

Here, the band X is wound around the printed photographs of each order, whereupon the printed photographs are inserted into the insertion opening 32 by a staff member of the photograph developing store. Further, a barcode BC indicating the order number, the order number, the user name, and so on are printed on the band X. The staff member uses the barcode reader 37 to read the barcode BC when inserting the printed photographs, thereby enabling the delivery device 30 to obtain the order number. Further, a rack address is allocated to each rack R.

Hence, when the printed photographs are inserted, the delivery device 30 can associate the order number obtained by the barcode reader 37 with the rack address of the rack R carrying the printed photographs, and thus the delivery device 30 can manage the racks R and the order numbers of the printed photographs carried thereon.

A front portion shutter FS opens and closes the discharge opening 35. A rear portion shutter RS opens and closes the insertion opening 32. A table portion 36 guides the printed photographs bound by the band X to the insertion opening 32. Amonitor 34 displays various images prompting the user to receive the printed photographs. An elevation frame F1 raises and lowers the racks R. An insertion position guidance lamp LA1 shows the staff member the insertion opening 32 into which the printed photographs should be inserted. In this embodiment, three racks R are provided in series, and therefore three insertion openings 32 and three discharge openings 35 are provided.

A reception operation lamp 314 is illuminated when the user performs an operation to extract the printed photographs. A full lamp 315 is illuminated when no empty racks R are available. A control unit J is responsible for overall control of the delivery device 30.

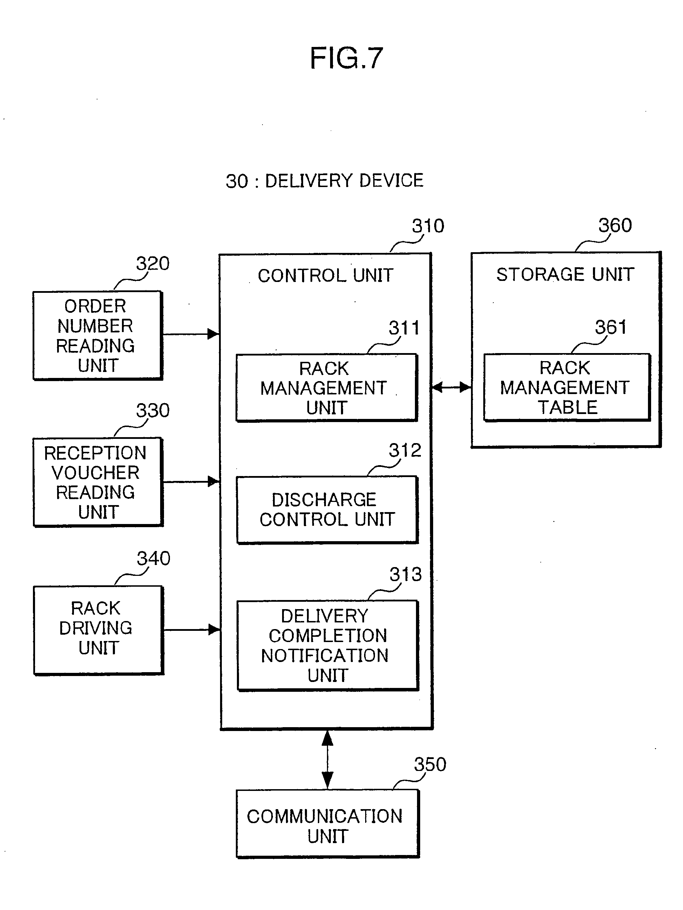

Fig. 7 is a block diagram of the delivery device 30. The delivery device 30 includes a control unit 310, an order number reading unit 320, a reception voucher reading unit 330, a rack driving unit 340, a communication unit 350, and a storage unit 360.

The order number reading unit 320 is constituted by the barcode reader 37 shown in Fig. 6, and under the control of the control unit 310, the order number reading unit 320 reads a barcode BC printed on the band X to obtain the order number. More specifically, the order number of printed photographs inserted by hand is read by the barcode reader 37, whereupon the order number and the position of the rack R of the delivery device 30 into which the printed photographs are inserted are stored.

The reception voucher reading unit 330 is constituted by the fixed barcode reader 33 shown in Fig. 5, and under the control of the control unit 310, the reception voucher reading unit 330 reads the barcode printed on the reception voucher V to obtain the order number.

The control unit 310 is constituted by a control unit J, for example, and includes a rack management unit 311, a discharge control unit 312, and a delivery completion notification unit 313. The rack management unit 311 receives the delivery request information transmitted from the management server 40 via the communication unit 350 before the printed photographs are inserted, and stores data stored in the received delivery request information in a rack management table 361, thereby managing the rack management table 361.

Fig. 14 is a view showing an example of a data structure of the delivery request information. The delivery request information includes columns relating to the order number and simultaneous delivery. Note that the columns of the delivery request information are examples and may be omitted or supplemented with other columns. The order number of the printed photographs carried on the rack R is stored in the order number column. Information indicating the presence or absence of another order to be delivered simultaneously is stored in the simultaneous delivery column. When another order to be delivered simultaneously exists, the order number of the other order is stored in the simultaneous delivery column, for example. When another order to be delivered simultaneously does not exist, the information "no" is stored in the simultaneous delivery column.

More specifically, when a member of the photograph developing store, a user that has been recognized as a member after placing an Internet order, or the like places an order on the reception device 10 disposed in the photograph developing store, and an undelivered order exists in the management server 40, the newly received order and the undelivered order must be delivered simultaneously. At this time, the new order and the undelivered order are managed by writing the respective order numbers thereof in the simultaneous delivery column.

Returning to Fig. 7, when the order number is obtained by the order number reading unit 320, the rack management unit 311 specifies a single empty rack R on which to carry the printed photographs, and stores a rack address allocated to the rack R in the rack management table 361 in association with the order number obtained by the order number reading unit 320.

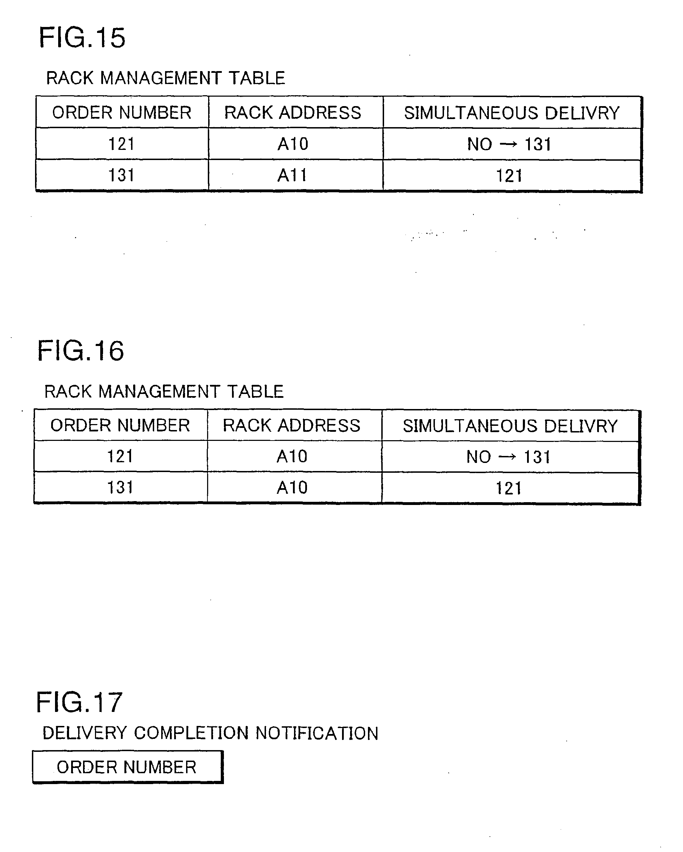

Fig. 15 is a view showing an example of a data structure of the rack management table 361. The rack management table 361 includes columns relating to order number, rack address, and simultaneous delivery. The order number extracted from the delivery request information is stored in the order number column. The rack address of the rack R associated with the order number is stored in the rack address column. When another order to be delivered simultaneously exists, the order number of the other order is stored in the simultaneous delivery column, and when another order does not exist, the information "no" is stored in the simultaneous delivery column.

In the case shown in Fig. 15, when the rack management unit 311 receives delivery request information relating to an order number 131, "121" is already stored in the simultaneous delivery column, and therefore, when the delivery request information relating to the order number 131 is stored in the rack management table 361, the content of the simultaneous delivery column relating to the order number 121 is updated from "no" to 131. Thus, the order having the order number 121 and the order having the order number 131 are associated such that the delivery device 30 can deliver the two orders simultaneously.

Further, the rack management unit 311 may associate orders that are to be delivered simultaneously, as shown in Fig. 16. More specifically, when the rack management unit 311 receives the delivery request information relating to the order number 131, "121" is already stored in the simultaneous delivery column, and therefore, when the delivery request information relating to the order number 131 is stored in the rack management table 361, "A10", which is the rack address associated with the order number 121, is stored in the rack address column of the order number 131.

In this case, when the order number is obtained by the order number reading unit 320, the rack management unit 311 refers to the rack management table 361, and when a rack address is stored in the rack address column of the obtained order number 121, processing to allocate a rack address to the obtained order number is omitted. The rack management unit 311 may then control the rack driving unit 340 such that the printed photographs relating to the obtained order number are carried on the rack R having the rack address stored in the rack address column.

Thus, the printed photographs relating to the order numbers 121 and 131 may be housed in the rack R having the rack address "A10", or in other words the same rack R, and delivered at the same time.

Further, when the order number is obtained by the order number reading unit 320, the rack management unit 311 controls the rack driving unit 340 such that the rack R on which the printed photographs are to be carried is positioned in the insertion opening 32.

When the order number is obtained by the reception voucher reading unit 330, the discharge control unit 312 specifies the rack R having the rack address that is associated with the order number by referring to the rack management table 361, and controls the rack driving unit 340 such that the specified rack R is positioned in the discharge opening 35. The discharge control unit 312 then controls the rack driving unit 340 such that the printed photographs that are carried on the rack R positioned in the discharge opening 35 are discharged.

Here, when the order number is obtained by the reception voucher reading unit 330, the discharge control unit 312 refers to the rack management table 361, and when the order number of an order to be delivered simultaneously is associated with the order having the obtained order number and the two orders are housed in separate racks R, the discharge control unit 312 controls the rack driving unit 340 such that the printed photographs relating to the obtained order number are discharged first and the printed photographs relating to the other associated order number are discharged immediately thereafter.

In the case shown in Fig. 15, for example, when the order number 121 is obtained by the reception voucher reading unit 330, the rack driving unit 340 may be controlled such that the rack R having the rack address "A10" is positioned in the discharge opening 35 and the printed photographs carried on this rack R are discharged, whereupon the rack driving unit 340 is controlled such that the rack R having a rack address "A11" is positioned in the discharge opening 35 and the printed photographs carried on this rack R are discharged immediately thereafter.

When the discharge of printed photographs relating to a certain order is completed by the discharge control unit 312, the delivery completion notification unit 313 generates a delivery completion notification indicating that delivery of the printed photographs relating to the order to the user is complete, and transmits the generated delivery completion notification to the management server 40 via the communication unit 350.

Fig. 17 is a view showing an example of a data structure of the delivery completion notification. The delivery completion notification includes an order number column. The order number relating to the delivered printed photographs is stored in the order number column.

The rack driving unit 340 is constituted by an elevation frame F1 shown in Figs. 5 and 6, a motor (not shown) for causing the elevation frame F1 to raise and lower the rack R, a push-out mechanism Q, a motor (not shown) for sliding the push-out mechanism Q, and so on, and under the control of the control unit 310, the rack driving unit 340 performs positioning of the rack R and discharge of the printed photographs.

The communication unit 350 is constituted by a communication device that conforms to the LAN communication protocol, and serves as a communication interface with the various devices connected to the LAN. In this embodiment in particular, the communication unit 350 receives the delivery request information transmitted from the management server 40 and transmits the delivery completion notification to the management server 40.

The storage unit 360 is constituted by a rewritable non-volatile storage device, for example, and stores the rack management table 361.

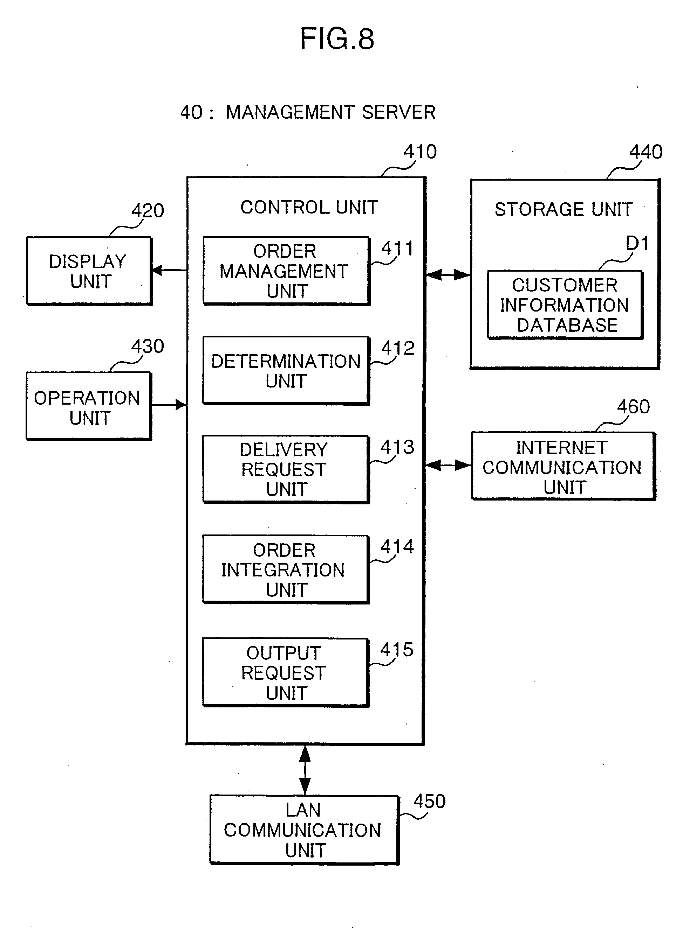

Fig. 8 is a block diagram of the management server 40 shown in Fig. 1. The management server 40 includes a control unit 410, a display unit 420, an operation unit 430, a storage unit 440, a LAN communication unit 450, and an Internet communication unit 460. The control unit 410 is constituted by a CPU, for example, and is responsible for overall control of the management server 40. The control unit 410 includes an order management unit 411, a determination unit 412, a delivery request unit 413, an order integration unit 414, and an output request unit 415.

The order management unit 411 manages orders by creating a customer information database D1 on the basis of the order notification information transmitted from the reception device 10 or the terminal device 50 and the delivery completion notification transmitted from the delivery device 30.

More specifically, after receiving the order notification information shown in Fig. 12 from the reception device 10 or the terminal device 50, the order management unit 411 specifies a corresponding record of the customer information database D1 from the member code stored in the order notification information, and stores the information stored in the respective columns of the order notification information, i.e. image data, number of prints, order date, and printing fee, in the corresponding columns of the specified record.

After receiving the delivery completion notification shown in Fig. 17 from the delivery device, on the other hand, the order management unit 411 specifies a corresponding record of the customer information database D1 from the order number stored in the delivery completion notification, and updates the information stored in a delivery column of the specified record from "not completed" to "completed".

Further, the order management unit 411 manages orders using a printing output completion notification transmitted from the photograph printing device 20.

More specifically, after receiving the printing output completion notification from the photograph printing device 20, the order management unit 411 manages the orders by specifying a corresponding record of the customer information database D1 from the order number stored in the printing output completion notification, and updating the information stored in a printing output column of the specified record from "not completed" to "completed". Note that the data structure of the printing output completion notification is identical to the data structure of the delivery completion notification shown in Fig. 17, and therefore description thereof has been omitted.

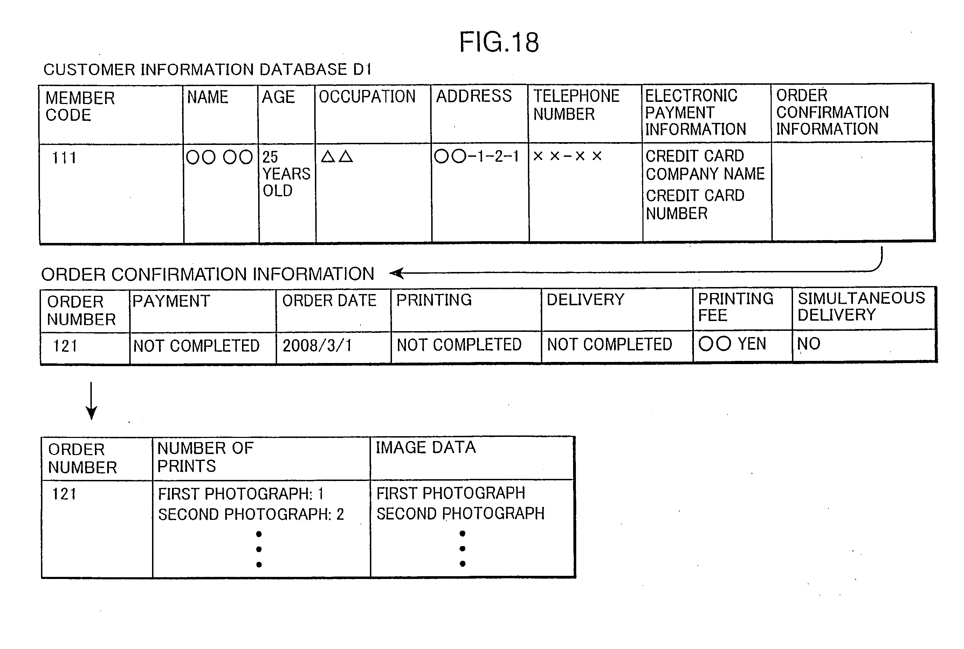

Fig. 18 is a view showing an example of a data structure of the customer information database D1 stored by the storage unit 440. As shown in Fig. 17, the customer information database D1 is constituted by a relational database in which a single record is allocated to each user, and includes columns relating tomembercode, name, age, occupation, address, telephonenumber, electronic payment information, and order confirmation information. Note that these columns are examples and may be omitted or supplemented with other columns.

A member code allocated to the user is stored in the member code column. Information indicating the name of the user is stored in the name column. Information indicating the age of the user is stored in the age column. Information indicating the address of the user is stored in the address column. Information indicating the telephone number of the user is stored in the telephone number column. Information required for the user to perform electronic payment is stored in the electronic payment information column. The company name of a credit card used by the user, a credit card number, and so on, for example, are included as the electronic payment information.

The order confirmation information column further includes columns relating to order number, payment, order date, printing, delivery, printing fee, and simultaneous delivery. The order number attached to the order is stored in the order number column. Information indicating whether or not electronic payment has been completed in relation to the orders is stored in the payment column. In the case shown in Fig. 18, electronic payment relating to the order number 121 is not complete, and therefore the information "not completed" is stored in the payment column.

Information indicating the reception time, day, month, and year of the order is stored in the order date column. Information indicating whether or not photograph printing has been completed is stored in the printing column. In the case shown in Fig. 18, the printed photographs relating to the order number 121 have not been output, and therefore the information "not completed" is stored in the printing column.

Information indicating whether or not the printed photographs relating to the order have been delivered to the user is stored in the delivery column. In the case shown in Fig. 18, delivery of the printed photographs relating to the order number 121 is not complete, and therefore the information "not completed" is stored in the delivery column. The printing fee for the order is stored in the printing fee column. The simultaneous delivery column stores identical data to the data stored in the simultaneous delivery column of the delivery request information shown in Fig. 14.

The order number column further includes a print number column and an image data column. Information indicating the number of prints of each set of image data is stored in the print number column. In the example shown in Fig. 17, the number of prints of a first set of image data is one, and the number of prints of a second set of image data is two. One or a plurality of sets of image data included in the order is stored in the image data column.

Returning to Fig. 8, after receiving the order notification information from the reception device 10 or the terminal device 50, the determination unit 412 determines whether or not an undelivered order, i.e. undelivered printed photographs, exists in relation to the registered user having the corresponding member code on the basis of the information stored in the delivery column of the customer information database D1.

In the case shown in Fig. 18, order notification information relating to a user having a user code 111 has been received and an order having the order number 121, for which the information "not completed" is stored in the delivery column of order confirmation information relating to the user, exists, and therefore the determination unit 412 determines that the order having the order number 121 is an undelivered order.

Further, after receiving the order notification information from the reception device 10 or the terminal device 50, the determination unit 412 determines whether or not the printed photographs relating to the undelivered order have been output by the photograph printing device 20 on the basis of the information stored in the printing column of the customer information database D1.

In the case shown in Fig. 18, the information "not completed" is stored in the printing column of the order confirmation information, and therefore the determination unit 412 determines that the printed photographs of the order having the order number 121 have not been output.

Returning to Fig. 8, when the determination unit 412 determines that an undelivered order exists and that the printed photographs relating to the undelivered order have been output by the photograph printing device 20, the delivery request unit 413 generates delivery request information for controlling the delivery device 30 such that the printed photographs relating to the order notification information transmitted from the reception device 10 or the terminal device 50 are delivered at the same time as the printed photographs relating to the undelivered order, and transmits the generated delivery request information to the delivery device 30.

The order integration unit 414 integrates the undelivered order with the order relating to the received order notification information into a single order when the determination unit 412 determines that output of the undelivered order is not complete.

The output request unit 415 specifies an order for which the printed photographs have not been output from the customer information database D1, generates the printing output request information shown in Fig. 13, and transmits the generated printing output request information to the photograph printing device 20. In this case, the output request unit 415 generates the printing output request information in order units and transmits the printing output request information to the photograph printing device 20 in sequence from the order having the lowest order number.

The display unit 420 is constituted by a display device such as a liquid crystal display or a plasma display, and displays various information under the control of the control unit 410. The operation unit 430 is constituted by an input device such as a keyboard or a mouse, and receives various operation commands from the user. The storage unit 440 is constituted by, for example, a hard disk, and stores the customer information database D1.

The LAN communication unit 450 is constituted by a communication device that conforms to the LAN communication protocol, and serves as a communication interface with the various devices connected to the LAN. In this embodiment in particular, the LAN communication unit 450 receives the order notification information transmitted from the reception device 10, the delivery completion notification transmitted from the delivery device 30, and the printing output completion notification transmitted from the photograph printing device 20, and transmits the printing output request information to the photograph printing device 20 and the delivery request information to the delivery device 30.

The Internet communication unit 460 is constituted by a communication device that conforms to an Internet communication protocol, and serves as a communication interface with the various devices connected to the network NT. In this embodiment in particular, the Internet communication unit 460 receives the order notification information transmitted from the terminal device 50.

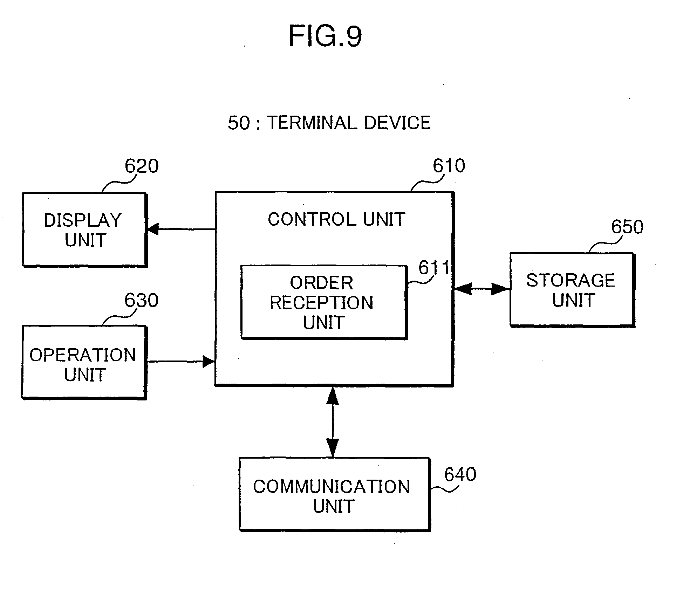

Fig. 9 is a block diagram of the terminal device 50 shown in Fig. 1. The terminal device 50 is constituted by a computer disposed in the home of the user, for example, and includes a control unit 610, a display unit 620, an operation unit 630, a communication unit 640, and a storage unit 650. The control unit 610 is constituted by a CPU, for example, and includes an order reception unit 611.

Similarly to the order reception unit 111 of the reception device 10, the order reception unit 611 receives an order, generates order notification information, and transmits the generated order notification information to the management server 40.

The display unit 620 is constituted by a display device such as a liquid crystal display or a plasma display, and displays various images under the control of the control unit 610. The operation unit 630 is constituted by an input device such as a keyboard or a mouse, and receives various operation input from the user.

The communication unit 640 is constituted by a communication device that conforms to an Internet communication protocol, and serves as a communication interface with the network NT. The storage unit 650 is constituted by a storage device such as a hard disk, and stores an operating system and so on.

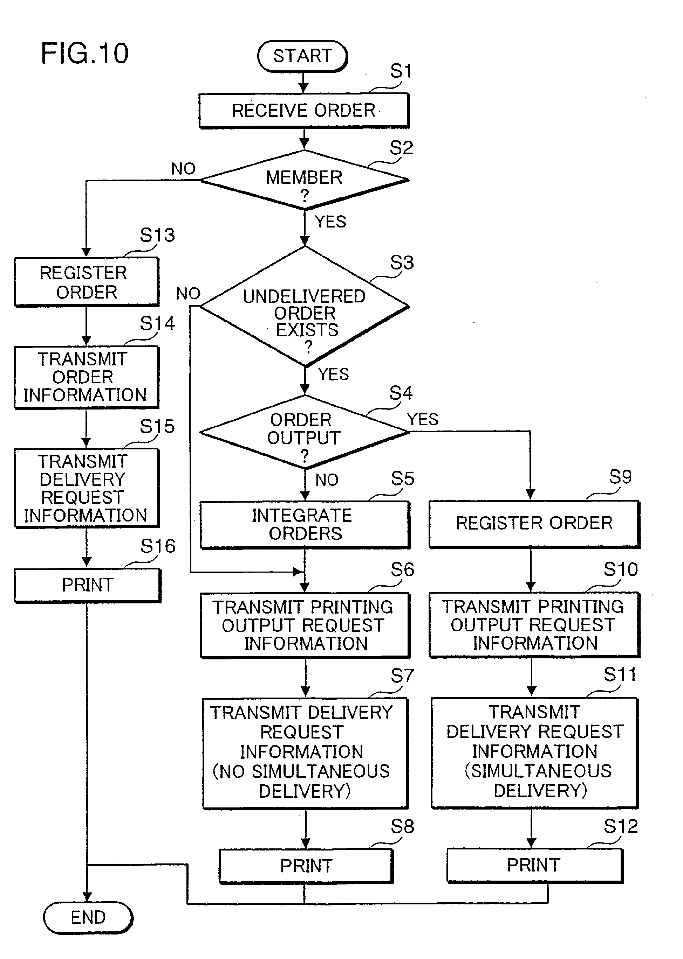

Fig. 10 is a flowchart showing an operation performed by the photograph printing system during order reception. First, the reception device 10 or the terminal device 50 receives an order from the user, generates order notification information, and transmits the generated order notification information to the management server 40 (step S1). In this case, when the order is received from a registered user, registered user order notification information is transmitted, and when the order is received from an unregistered user, unregistered user order notification information is transmitted.

Next, the management server 40, after receiving the registered user order notification information (YES in a step S2), determines whether or not any undelivered orders exist in relation to the registered user relating to the order notification information by referring to the customer information database D1 (step S3).

Having determined that undelivered orders exist (YES in the step S3), the management server 40 determines whether or not an order for which output of the printed photographs is complete exists among the undelivered orders (step S4). Note that when no undelivered orders exist (NO in the step S3), the processing advances to a step S6.

Having determined that an order for which output of the printed photographs is complete exists among the undelivered orders (YES in the step S4), the management server 40 attaches an order number to the order received in the step S1, thereby registering the order (step S9).

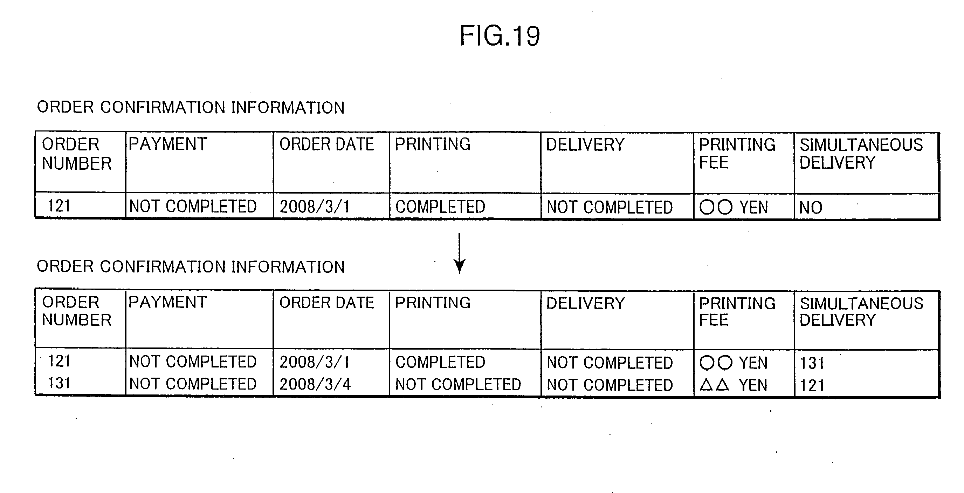

Fig. 19 is an illustrative view showing the processing of the step S9. In the drawing, the information "not completed" is stored in the delivery column of an order having the order number 121, and therefore this order corresponds to an undelivered order. Further, the order having the order number 121 is an undelivered order of the registered user who placed the order received in the step S1.

Further, "completed" is stored in the printing column of the order having the order number 121, and therefore this order corresponds to an undelivered order for which output of the printed photographs is complete.

Hence, the management server 40 attaches a new order number 131 to the order received in the step S1 without integrating the order received in the step S1 with the order having the order number 121. However, to ensure that the order received in the step S1 and the order having the order number 121 can be delivered simultaneously, the management server 40 stores 131, which is the order number of the order to be delivered at the same time, in the simultaneous delivery column of the order having the order number 121, and stores 121, which is the order number of the order to be delivered at the same time, in the simultaneous delivery column of the order having the order number 131 (lower section of Fig. 19).

Here, the reason why the management server 40 does not integrate the order received in the step S1 with the order having the order number 121 is that the printed photographs relating to the order having the order number 121 have already been output, and therefore a new order cannot be integrated with this order.

Next, the management server 40 generates printing output request information relating to the order having the order number 131, and transmits the generated printing output request information to the photograph printing device 20 (step S10).

Next, the management server 40 generates delivery request information relating to the order number 131, and transmits the generated delivery request information to the delivery device 30 (step S11). In this case, the management server 40 stores "121" in the simultaneous delivery column of the generated delivery request information so that the order having the order number 131 is delivered at the same time as the order having the order number 121.

Next, the photograph printing device 20 outputs the printed photographs of the order having the order number 131 (step S12). Note that when output of the printed photographs of the order having the order number 131 is complete, the photograph printing device 20 generates a printing output completion notification relating to the order and transmits the generated printing output completion notification to the management server 40.

When it is determined in the step S4 that an order for which output of the printed photographs is complete does not exist among the undelivered orders (NO in the step S4), the management server 40 integrates the order received in the step S1 with the undelivered order for which output of the printed photographs is not complete (step S5).

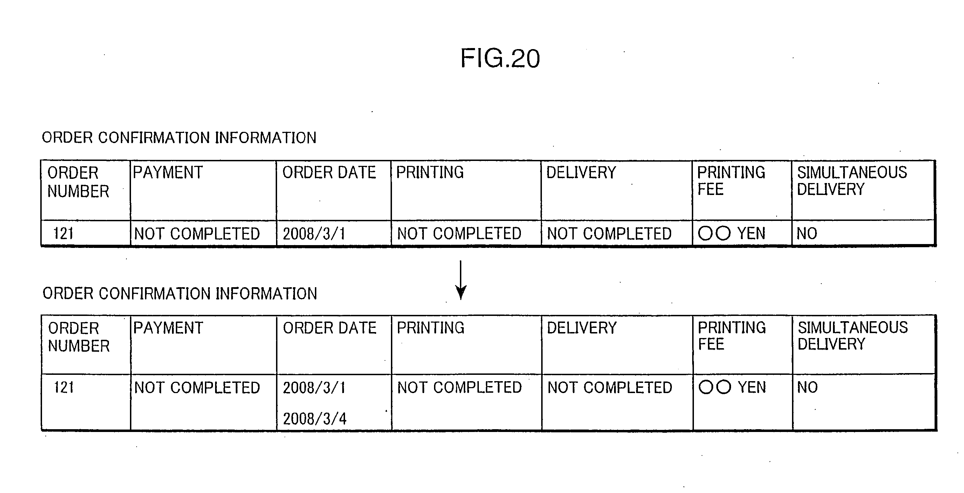

Fig. 20 is an illustrative view showing the processing of the step S5. In the drawing, the information "not completed" is stored in the delivery column of the order having the order number 121, and therefore the order corresponds to an undelivered order. Further, the order having the order number 121 is an undelivered order of the registered user who placed the order received in the step S1.

Further, "not completed" is stored in the printing column of the order having the order number 121, and therefore this order corresponds to an undelivered order for which output of the printed photographs is not complete.

Hence, the management server 40 integrates the order received in the step S1 with the order having the order number 121 (step S5). In this case, the order date of the order having the order number 121 is March 1, 2008, whereas the order date of the order received in the step S1 is March 4, 2008, and therefore a plurality of order dates including March 4, 2008 are written into the order date column, as shown in the lower section of Fig. 20.

Next, the management server 40 generates printing output request information relating to the order having the order number 121 and transmits the generated printing output request information to the photograph printing device 20 (step S6).

Next, the management server 40 generates delivery request information relating to the order number 131 and transmits the generated delivery request information to the delivery device 30 (step S7). In this case, the order received in the step S1 is included in the order having the order number 121, and therefore the management server 40 stores "no" in the simultaneous delivery column of the generated delivery request information.

Next, the photograph printing device 20 outputs the printed photographs of the order having the order number 121 (step S8). Note that when the photograph printing device 20 finishes outputting the printed photographs of the order having the order number 121, the photograph printing device 20 generates a printing output completion notification relating to the order and transmits the generated printing output completion notification to the management server 40.

After receiving unregistered user order notification information in the step S2 (NO in the step S2), the management server 40 attaches an order number to the order received in the step S1, thereby registering the order (step S13).

Next, the management server 40 generates printing output request information relating to the order registered in the step S13, and transmits the generated printing output request information to the photograph printing device 20 (step S14). Next, the management server 40 generates delivery request information relating to the order registered in the step S13, and transmits the generated delivery request information to the delivery device 30 (step S15).

Next, the photograph printing device 20 outputs the printed photographs of the order registered in the step S13 (step S16).

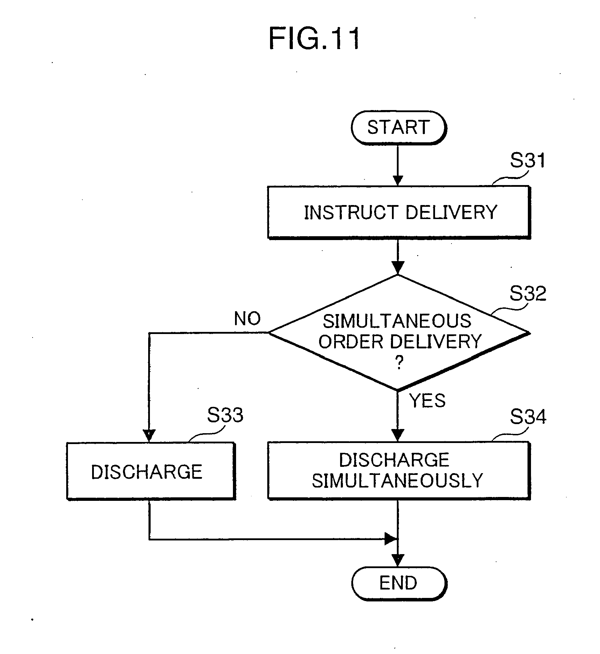

Fig. 11 is a flowchart showing an operation performed by the photograph printing system during printed photograph delivery. First, the delivery device 30 receives a delivery instruction when the reception voucher V is held against the fixed barcode reader (step S31). In this case, the delivery device 30 obtains the order number by reading the barcode printed on the reception voucher V.

Next, the delivery device 30 determines whether or not the order having the obtained order number is an order to be delivered simultaneously (step S32). In this case, the delivery device 30 determines that the order is to be delivered simultaneously when the order number of another order is written in the simultaneous delivery column of the rack management table 361 relating to the order having the obtained order number (YES in the step S32). When "no" is written in the simultaneous delivery column of the rack management table 361 relating to the order having the obtained order number (NO in the step S32), on the other hand, the delivery device 30 determines that the order is not to be delivered simultaneously.

When a negative determination is made in the step S32, the delivery device 30 discharges the printed photographs relating to the obtained order number from the rack R (step S33). When an affirmative determination is made in the step S32, on the other hand, the delivery device 30 discharges the printed photographs relating to the obtained order number from the rack R, and then discharges the printed photographs relating to the order number to be delivered at the same time as the obtained order number from the rack R (step S34).

Hence, according to this photograph printing system, when a user issues an instruction to have printed photographs delivered from the delivery device 30, and a plurality of orders for which printed photographs have not been received exist, the printed photographs relating to these orders can be received simultaneously. As a result, the load placed on the user during delivery of the printed photographs can be reduced greatly.

The photograph printing system described above can be summarized as follows.
(1) The photograph printing system described above is a photograph printing system in which a terminal device for receiving an order for photograph printing, a photograph printing device for outputting a printed photograph in accordance with the order, a delivery device for delivering the printed photograph output by the photograph printing device to a user, and a management server for managing the order are connected via a predetermined network, wherein the terminal device includes an order reception unit that receives the order for photograph printing in accordance with a member code and order information input by a registered user who has completed member registration in advance, and transmits order notification information including the member code and the order information to the management server, the delivery device includes a delivery completion notification unit that transmits a delivery completion notification to the management server when delivery of the printed photograph relating to the order received by the terminal device to the user is completed, and the management server includes : an order management unit that manages the order by creating a customer information database on the basis of the order notification information transmitted from the terminal device and the delivery completion notification transmitted from the delivery device; a determination unit which, upon reception of the order notification information transmitted from the terminal device, determines whether or not an undelivered order, or in other words an undelivered printed photograph, exists in relation to the registered user relating to the member code included in the order notification information on the basis of the customer information database; and a delivery request unit which, when the determination unit determines that an undelivered order exists, generates delivery request information for controlling the delivery device such that the printed photograph relating to the received order notification information is delivered simultaneously with the printed photograph relating to the undelivered order, and transmits the generated delivery request information to the delivery device.
   According to this constitution, when an order from the user is received by the terminal device, the management server determines whether or not an undelivered order, i.e. an undelivered printed photograph, exists in relation to the user who placed the order. When an undelivered order exists, the delivery request information is transmitted to the delivery device such that the printed photograph relating to the new order and the printed photograph relating to the undelivered order are delivered simultaneously.
   Hence, when a user who has completed member registration or the like issues an instruction for delivery of printed photographs from the delivery device and one or more orders for which the printed photographs have not yet been delivered exist, the printed photographs relating to these orders are delivered at the same time. As a result, the load placed on the user during delivery of the printed photographs can be reduced greatly.
(2) The terminal device preferably includes a first terminal device owned by the user and a second terminal device owned by a photograph developing store.
   According to this constitution, printed photographs relating to one or a plurality of orders are delivered simultaneously regardless of whether a user who has completed member registration or the like places an order using the first terminal device owned by him/herself or using the second terminal device owned by the photograph developing store. As a result, the load placed on the user during delivery of the printed photographs can be reduced greatly.
(3) The photograph printing device preferably includes a printing output completion notification unit which, when output of the printed photograph relating to the order received by the terminal device is complete, transmits an output completion notification to the management server. The order management unit of the management server preferably manages the order also using the printing output completion notification. The determination unit of the management server preferably also determines whether or not the printed photograph relating to the undelivered order has been output by the photograph printing device on the basis of the customer information database upon reception of the order notification information transmitted from the terminal device. The management server preferably further includes an order integration unit that integrates the undelivered order with the order relating to the order notification information transmitted from the terminal device when the determination unit determines that output of the undelivered order is not complete.
   According to this constitution, when the terminal device receives an order from a user who has completed member registration or the like, the management server determines whether or not the printed photograph relating to the undelivered order has been output by the photograph printing device. When it is determined that output of the undelivered order is not complete, the undelivered order is integrated with the new order. Hence, the order management load on the delivery device can be lightened, and when one or a plurality of orders have already been received from the registered user, the printed photographs relating to these orders can be delivered at the same time.
(4) The delivery request information preferably includes an order number for identifying the order and simultaneous delivery information indicating the presence or absence of another order to be delivered simultaneously with the order, and when the determination unit determines that the undelivered order exists and that the printed photograph relating to the undelivered order has been output by the photograph printing device, the delivery request unit of the management server preferably generates delivery request information, which includes simultaneous delivery information indicating that another order to be delivered simultaneously exists.
   According to this constitution, when it is determined that an undelivered order exists and that the printed photograph relating to the undelivered order has already been output by the photograph printing device such that the orders cannot be integrated, the delivery request information, which includes the simultaneous delivery information indicating that another order to be delivered simultaneously exists, is generated and transmitted to the delivery device. Thus, the printed photograph relating to the subject order and the printed photograph relating to the undelivered order can be delivered simultaneously.
(5) When the orders are integrated by the order integration unit, the delivery request unit of the management server preferably generates delivery request information including simultaneous delivery information indicating that another order to be delivered simultaneously with the order does not exist.
   According to this constitution, the delivery device can recognize reliably that another order to be delivered simultaneously with the integrated orders does not exist.
(6) The delivery device preferably further includes: a plurality of racks to which rack addresses are allocated, and which house the printed photographs of each order; and a storage unit that stores a rack management table in which the order number attached to each order and the rack address of a rack housing the printed photograph relating to the order number are associated.
   According to this constitution, the rack management table in which the order number and the rack address are associated is provided, and therefore the delivery device can identify the rack housing the printed photograph relating to the order number accurately and speedily from the order number.
(7) The delivery device preferably further includes a rack management unit that stores the order number included in the delivery request information in association with the simultaneous delivery information in the rack management table.
   According to this constitution, the delivery device can quickly recognize a plurality of orders to be delivered simultaneously.
(8) The rack management unit of the delivery device preferably houses printed photographs relating to a plurality of orders to be delivered simultaneously in an identical rack.
   According to this constitution, the delivery device can discharge the printed photographs relating to a plurality of orders to be delivered simultaneously through a single printed photograph discharge process.
(9) The delivery device preferably further includes: a discharge opening that discharges the printed photograph; a rack driving unit that positions the rack in the discharge opening; and a discharge control unit that specifies a rack having a rack address that is associated with the order number of an order to be discharged by referring to the rack management table, and controls the rack driving unit such that the specified rack is positioned in the discharge opening.
   According to this constitution, the rack housing the printed photograph of the subject order is positioned in the discharge opening such that the printed photograph is discharged from the discharge opening.
(10) The second terminal is preferably constituted by a reception device, which is a dedicated device for receiving the order for photograph printing from the user. The reception device preferably includes an issuing unit that issues a reception voucher in which the order number attached to the order is printed onto a sheet of paper. The delivery device preferably further includes a reception voucher reading unit that reads the order number printed on the reception voucher as the order number of the order to be discharged.

According to this constitution, the user can receive the ordered printed photograph simply by causing the delivery device to read the order number printed on the reception voucher issued at the time of order placement.

This application is based on Japanese patent application serial no. 2008-084608, filed in Japan Patent Office on March 27, 2008, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A photograph printing system in which a terminal device for receiving an order for photograph printing, a photograph printing device for outputting a printed photograph in accordance with the order, a delivery device for delivering the printed photograph output by the photograph printing device to a user, and a management server for managing the order are connected via a predetermined network,
wherein the terminal device comprises an order reception unit that receives the order for photograph printing in accordance with a member code and order information input by a registered user who has completed member registration in advance, and transmits order notification information including the member code and the order information to the management server,
the delivery device comprises a delivery completion notification unit that transmits a delivery completion notification to the management server when delivery of the printed photograph relating to the order received by the terminal device to the user is completed, and
the management server comprises:
an order management unit that manages the order by creating a customer information database on the basis of the order notification information transmitted from the terminal device and the delivery completion notification transmitted from the delivery device;
a determination unit which, upon reception of the order notification information transmitted from the terminal device, determines whether or not an undelivered order, or in other words an undelivered printed photograph, exists in relation to the registered user relating to the member code included in the order notification information on the basis of the customer information database; and
a delivery request unit which, when the determination unit determines that an undelivered order exists, generates delivery request information for controlling the delivery device such that the printed photograph relating to the received order notification information is delivered simultaneously with the printed photograph relating, to the undelivered order, and transmits the generated delivery request information to the delivery device.

2. The photograph printing system according to claim 1, wherein the terminal device includes a first terminal device owned by the user and a second terminal device owned by a photograph developing store.

3. The photograph printing system according to claim 1 or 2, wherein the photograph printing device comprises a printing output completion notification unit which, when output of the printed photograph relating to the order received by the terminal device is complete, transmits an output completion notification to the management server,
the order management unit of the management server manages the order also using the printing output completion notification,
the determination unit of the management server also determines whether or not the printed photograph relating to the undelivered order has been output by the photograph printing device on the basis of the customer information database upon reception of the order notification information transmitted from the terminal device, and
the management server further comprises an order integration unit that integrates the undelivered order with the order relating to the order notification information transmitted from the terminal device when the determination unit determines that output of the undelivered order is not complete.

4. The photograph printing system according to any of claims 1 to 3, wherein the delivery request information includes an order number for identifying the order and simultaneous delivery information indicating the presence or absence of another order to be delivered simultaneously with the order, and
when the determination unit determines that the undelivered order exists and that the printed photograph relating to the undelivered order has been output by the photograph printing device, the delivery request unit of the management server generates delivery request information, which includes simultaneous delivery information indicating that another order to be delivered simultaneously exists.

5. The photograph printing system according to claim 3 or 4, wherein, when the orders are integrated by the order integration unit, the delivery request unit of the management server generates delivery request information including simultaneous delivery information indicating that another order to be delivered simultaneously with the order does not exist.

6. The photograph printing system according to any of claims 1 to 5, wherein the delivery device further comprises:
a plurality of racks to which rack addresses are allocated, and which house the printed photographs of each order; and
a storage unit that stores a rack management table in which the order number attached to each order and the rack address of a rack housing the printed photograph relating to the order number are associated.

7. The photograph printing system according to claim 6, wherein the delivery device further comprises a rack management unit that stores the order number included in the delivery request information in association with the simultaneous delivery information in the rack management table.

8. The photograph printing system according to claim 7, wherein the rack management unit of the delivery device houses printed photographs relating to a plurality of orders to be delivered simultaneously in an identical rack.

9. The photograph printing system according to any of claims 6 to 8, wherein the delivery device further comprises:
a discharge opening that discharges the printed photograph;
a rack driving unit that positions the rack in the discharge opening; and
a discharge control unit that specifies a rack having a rack address that is associated with the order number of an order to be discharged by referring to the rack management table, and controls the rack driving unit such that the specified rack is positioned in the discharge opening.

10. The photograph printing system according to any of claims 2 to 9, wherein the second terminal is constituted by a reception device, which is a dedicated device for receiving the order for photograph printing from the user,
the reception device comprises an issuing unit that issues a reception voucher in which the order number attached to the order is printed onto a sheet of paper, and
the delivery device further comprises a reception voucher reading unit that reads the order number printed on the reception voucher as the order number of the order to be discharged.
